# EUROPEAN PATENT APPLICATION

(11) **EP 4 492 607 A2**
(43) Date of publication of application: **15.01.2025**
(21) Application number: 24187636.6
(22) Date of filing: 10.07.2024
(51) Int. Cl.: H02J 3/00, H02J 3/14, H02J 13/00

(54) **METHOD AND SYSTEM FOR PROVIDING RECOMMENDATIONS FOR INCONGRUOUS CONSUMPTION OF ELECTRICAL ENERGY BY ELECTRICAL ASSET**

(30) Priority: 12.07.2023 IN 202341046953
(71) Applicant: ABB SCHWEIZ AG, 5400 Baden (CH)
(72) Inventor: PAL, Mayukha, 502032 Ameenpur (IN); ADITYA, Parisineni Sai Ram, 503001 Nizamabad (IN)
(74) Representative: Zimmermann & Partner Patentanwälte mbB

(57) **Abstract**

A method of providing recommendations for incongruous consumption of electrical energy by an electrical asset. The method includes predicting, in real-time, total electrical energy consumption of the electrical asset for a predefined time period using a non-linear relation depicting the consumption of electrical energy, wherein the non-linear relation is determined by performing regression analysis on a plurality of parameters monitored in the real-time, determining whether the predicted total electrical energy consumption falls outside of electrical energy consumption range having a lower electrical energy threshold and an upper electrical energy threshold, wherein the electrical energy consumption range indicates a desired electrical energy consumption of the electrical asset, and when the predicted total electrical energy consumption falls outside the electrical energy consumption range, performing generating an explanation of the predicted total electrical energy consumption by calculating contribution values for each of the plurality of parameters, wherein the contribution values indicate relative contribution of each of the plurality of parameters to the predicted total energy consumption, identifying one or more parameters among the plurality of parameters, responsible for driving the predicted total electrical energy consumption outside the electrical energy consumption range, based on the contribution values calculated for the plurality of parameters, and providing recommendations to prevent the incongruous consumption of the electrical energy based on the one or more parameters identified among the plurality of parameters.

## Description

### TECHNICAL FIELD

The present disclosure generally relates to data analytics in electrical energy distribution systems. More particularly, the present disclosure relates to a system and a method for predicting incongruous electrical energy consumption by an electrical asset and providing recommendations for the incongruous electrical energy consumption.

### BACKGROUND

The primary objective of an electricity distribution system is to meet the user's demands for electrical energy after receiving the bulk electrical energy from transmission or sub-transmission stations. The electrical distribution system is an electrical network which distributes electrical energy to an end user for utilization. There are two major types of distribution substations i.e., primary substation and user substation. The primary substation serves as a load center and the user substation interfaces to the low voltage (LV) network. The electrical distribution system may include multiple electrical components or electrical assets such as supply lines, transformers, switchgears, circuit breakers, switches, relays, fuses, cooling circuits, receptacles, utilization components, and the like. The asset management is required to maintain functionality of the electrical assets and to minimize breakdowns of the electrical assets, to provide sustainable and uninterrupted power supply. Generally, the asset management includes monitoring behaviour of the electrical assets present in the electrical distribution system and restoring faults that result in supply interruption for end users.

Conventional system discloses electrical distribution in which the components associated with the electrical distribution system are monitored to predict the energy demand. However, these systems may result into inaccurate or highly error prone predictions as complex correlation between the variables are not considered.

Hence, there is a need for techniques that may determine electrical energy demand of the electrical assets and may also accurately determine the factor that drives the electrical energy consumption of the electrical assets more than the desired value.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method of providing recommendations for incongruous consumption of electrical energy by an electrical asset. The method comprises predicting, in real-time, total electrical energy consumption of the electrical asset for a predefined time period using a non-linear relation depicting the consumption of electrical energy. The non-linear relation is determined by performing regression analysis on a plurality of parameters monitored in the real-time. Further, the method comprises determining whether the predicted total electrical energy consumption falls outside of electrical energy consumption range having a lower electrical energy threshold and an upper electrical energy threshold. The electrical energy consumption range indicates a desired electrical energy consumption of the electrical asset. When the predicted total electrical energy consumption falls outside the electrical energy consumption range, the method performs generating of an explanation of the predicted total electrical energy consumption by calculating contribution values for each of the plurality of parameters. The contribution values indicate relative contribution of each of the plurality of parameters to the predicted total energy consumption. Thereafter, the method comprises identifying one or more parameters among the plurality of parameters, responsible for driving the predicted total electrical energy consumption outside the electrical energy consumption range, based on the contribution values calculated for the plurality of parameters. Finally, the method comprises providing recommendations to prevent the incongruous consumption of the electrical energy based on the one or more parameters identified among the plurality of parameters.

In accordance with the present disclosure, the electrical asset comprises at least one of an active components of an electric grid, a passive component of the electric grid, an electrical distribution component in industrial, and an electrical appliance.

In accordance with the present disclosure, the plurality of parameters comprises at least one of current, voltage, electric charge, resistance, capacitance, inductance, power factor, reactive power, and frequency.

In accordance with the present disclosure, the plurality of parameters are monitored using corresponding plurality of sensors associated with the electrical asset.

In accordance with the present disclosure, the plurality of parameters are selected among a group of parameters by: identifying the group of parameters responsible for the consumption of the electrical energy, computing coefficient values for each of the group of parameters, wherein each of the coefficient values indicate contribution of corresponding parameter in the consumption of the electrical energy, and selecting the plurality of parameters among the group of parameters based on the coefficient values of the group of parameters, wherein each of the selected plurality of parameters have a coefficient value greater than a threshold value.

In accordance with the present disclosure, the regression analysis on the plurality of parameters to determine the non-linear relation is performed using a trained model.

In accordance with the present disclosure, wherein to determine the non-linear relation by performing the regression analysis on the plurality of parameters using the trained model, the method comprises: determining the non-linear relation between the consumption of the electrical energy by the electrical asset vis-à-vis the plurality of parameters using the regression analysis, updating the non-linear relation based on the plurality of parameters monitored in the real-time, and predicting the total electrical energy consumption of the electrical asset in the real-time based on the updated non-linear relation.

In accordance with the present disclosure, wherein identifying the one or more parameters among the plurality of parameters, responsible for driving the predicted total electrical energy consumption outside the electrical energy consumption range, based on the contribution values calculated for the plurality of parameters the method comprises: comparing the contribution value of each of the plurality of parameters with a global threshold value, and identifying the one or more parameters, among the plurality of parameters, such that the one or more parameters identified have the corresponding contribution values going beyond the global threshold value.

In accordance with the present disclosure, the recommendations is provided based on whether the predicted total electrical energy consumption is below the lower electrical energy threshold or above the upper electrical energy threshold.

In accordance with the present disclosure, the recommendations comprise at least one of software-related recommendations and hardware-related recommendations.

In another embodiment, the present disclosure discloses a computing system for providing recommendations for incongruous consumption of electrical energy by an electrical asset. The computing system comprises a processor and a memory. The processor is configured to predict, in real-time, total electrical energy consumption of the electrical asset for a predefined time period using a non-linear relation depicting the consumption of electrical energy. The non-linear relation is determined by performing regression analysis on a plurality of parameters monitored in real-time. Further, the processor is configured to determine whether the predicted total electrical energy consumption falls outside of electrical energy consumption range having a lower electrical energy threshold and an upper electrical energy threshold. The electrical energy consumption range indicates a desired electrical energy consumption of the electrical asset. When the predicted total electrical energy consumption falls outside the electrical energy consumption range, the processor configured to generate an explanation of the predicted total electrical energy consumption by calculating contribution values for each of the plurality of parameters. The contribution values indicate relative contribution of each of the plurality of parameters to the predicted total energy consumption. Thereafter, the processor is configured to identify one or more parameters among the plurality of parameters, responsible for driving the predicted total electrical energy consumption outside the electrical energy consumption range, based on the contribution values calculated for the plurality of parameters. Finally, the processor is configured to provide recommendations to prevent the incongruous consumption of the electrical energy based on the one or more parameters identified among the plurality of parameters.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary environment for providing recommendations for incongruous consumption of electrical energy by an electrical asset, in accordance with some embodiments of the present disclosure;
**Figure 2A** illustrates a detailed diagram of a computing system for providing recommendations for incongruous consumption of electrical energy by an electrical asset, in accordance with some embodiments of the present disclosure;
**Figure 2B** illustrates an exemplary graph of contribution values of parameters, in accordance with some embodiments of the present disclosure;
**Figure 2C** illustrates an exemplary graph where energy consumption exceeds the total energy consumption, in accordance with some embodiments of the present disclosure;
**Figure 2D** illustrates an exemplary graph where energy consumption exceeds the total energy consumption, in accordance with some embodiments of the present disclosure;
**Figure 3** shows an exemplary flow chart illustrating method steps for providing recommendations for incongruous consumption of electrical energy by an electrical asset, in accordance with some embodiments of the present disclosure;
**Figure 4** illustrates a block diagram of an exemplary computer system for performing energy management for the electrical distribution system, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Due to increased electric energy consumption and environmental problems caused by power plants with fossil fuels, the use of renewable energies in the power system is essential. Renewable energy resources, such as solar and wind, have a direct dependence on climate conditions. Because of uncertainty in weather forecasting, the production of renewable energy resources will also be faced with uncertainty. The intermittent nature of the production of renewable energy resources has created specific challenges in the operation of these resources. Therefore, electrical distribution system has been facing basic problems with balancing between supply and demand and increasing reliability in the power grid. The present disclosure focuses on first identifying root cause of any incongruous consumption of electrical energy by electrical assets and thereafter providing recommendations for rectifying the same.

Predicting the total electrical energy consumption of the electrical asset is crucial as power supply to any electrical asset if continually fluctuate, it creates transient and may consume higher energy. This is not only energy wastage but also can cause damage to the electrical assets or its components. Thus, it is important to monitor energy consumption and its usage pattern for the electrical assets while performing demand management. The present disclosure describes techniques to provide explainable prediction of energy consumption and recommendation based on the predicted energy consumption. Different parameters associated with energy consumption are monitored in real-time using corresponding sensors associated with the electrical asset. A total electrical energy consumption of the electrical asset is predicted for a predefined time period based on the monitoring of the parameters. The present disclosure utilizes a non-linear relation that depicts the consumption of electrical energy. The non-linear relation is determined by performing regression analysis on the parameters monitored in real-time. The parameters may include, for example, current, voltage, electric charge, resistance, capacitance, inductance, power factor, reactive power, and frequency.

Based on the predicted total electrical energy consumption of the electrical asset, it may be determined whether the predicted total electrical energy consumption falls outside of electrical energy consumption range. The energy consumption range may have a lower electrical energy threshold and an upper electrical energy threshold. The electrical energy consumption range indicates a desired electrical energy consumption of the electrical asset. In other words, the usage of electrical energy is predicted to determine whether energy consumption is outside the desired range. For instance, the electrical energy is transmitted to a power grid from the electrical distribution system and is continuously monitored in real-time to predict total electrical energy consumption of the electrical asset for a predefined time period using a non-linear relation depicting the consumption of electrical energy. When the predicted total electrical energy consumption falls outside the electrical energy consumption range, an explanation is generated by calculating contribution values for each of the parameters. The contribution values indicate relative contribution of each of the parameters to the predicted total energy consumption. Upon generating the explanation, only certain parameters responsible for driving the predicted total electrical energy are identified when the predicted total electrical energy consumption falls outside the electrical energy consumption range. Based on the generated explanation and identified parameters responsible for driving the predicted total electrical energy consumption outside the electrical energy consumption range, the recommendations are generated to prevent the incongruous consumption of the electrical energy.

Accordingly, the present disclosure provides a method and a system for providing the recommendations for incongruous consumption of electrical energy by the electrical asset. The present disclosure discloses a technique that performs complex system analysis using the non-linear dynamics on measurement data of the electrical distribution system. The disclosed technique provides high accuracy in predicting demand of the electrical asset. The complex non-linear correlation is considered between the variables/parameters through sparse regression. One or more parameters responsible for driving the predicted total electrical energy consumption outside the electrical energy consumption range are identified. Further, an explanation is generated which helps in quick and easy understanding of what drove the system to such a demand state.

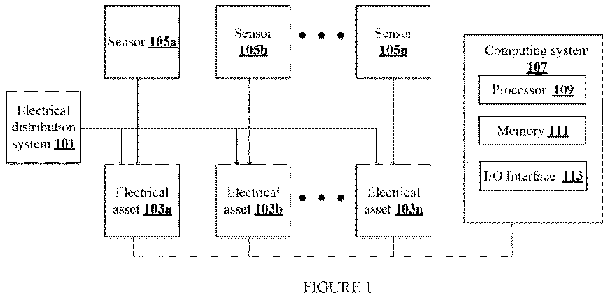

**Figure 1** illustrates an exemplary environment **100** for providing recommendations for incongruous consumption of electrical energy by an electrical asset, in accordance with some embodiments of the present disclosure. The exemplary environment **100** comprises an electrical distribution system **101,** one or more electrical assets **103₁, 103₂,** ........., **103ₙ** (collectively referred as the electrical asset **103**), one or more sensors **105₁**, **105₂**, ........., **105ₙ** (collectively referred as the sensors **105**) and a computing system 107, but not limited thereto. The electrical distribution system **101** is an electrical network through which electrical energy is distributed to an end user for utilization. The electrical distribution system **101** comprises multiple components such as supply lines, transformers, switchgears, circuit breakers, switches, relays, fuses, cooling circuits, receptacles, utilization components, and the like. Components of the electrical distribution system **101** such as switchgears, circuit breakers, switches, relays, fuses, and the like, protect other components of the electrical distribution system **101** such as the supply lines, the transformers, the utilization components, and the like, by monitoring the other components.

In some embodiments, the electrical asset **103** may be at least one of an active components of an electric grid, a passive component of the electric grid, an electrical distribution component in industrial, and an electrical appliance, but not limited thereto. The electrical asset **103** is associated with one or more sensors **105₁**, **105₂**, ........., **105_{N}** (collectively referred as the one or more sensors **105**). In an embodiment, the one or more sensors **105** may be implemented inside the electrical asset **103,** but not limited thereto. For example, the one or more sensors **105** may include a current sensor, a voltage sensor, and the like. The one or more sensors **105** may be implemented outside the electrical asset **103.** For example, the one or more sensors **105** may include environmental sensors such as a temperature sensor, a humidity sensor, and the like.

The computing system **107** may be configured to provide recommendations for incongruous consumption of electrical energy by an electrical asset **103.** The computing system **107** may comprise a processor **109,** a memory **111** and an I/O interface **113.** The computing system **107** may be a computing device such as, a laptop computer, a desktop computer, a Personal Computer (PC), a notebook, a smartphone, a tablet, e-book readers, a server, a network server, a cloud-based server, an edge computing device, a processing device, router, and the like.

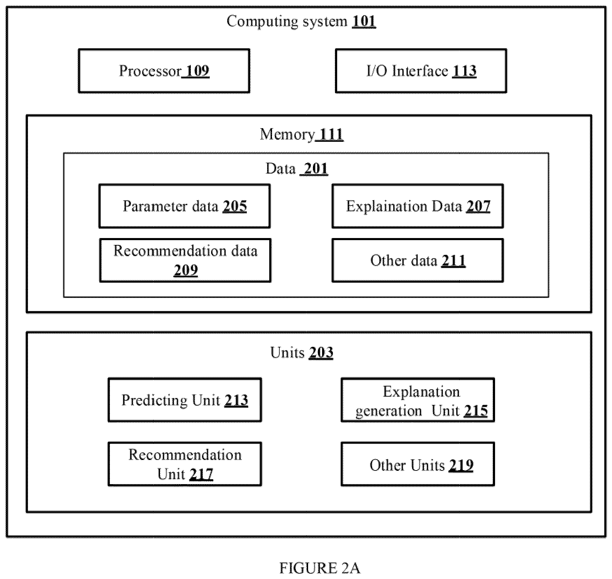

Now figure 1 will be explained in conjunction with figure 2A. **Figure 2A** illustrates a detailed diagram of the computing system **107** for providing recommendations for incongruous consumption of electrical energy by an electrical asset **103,** in accordance with some embodiments of the present disclosure. The computing system **107,** comprises a processor **109,** a memory **111** and an Input/ Output (I/O) interface **113.** In some embodiments, the memory **111** may be communicatively coupled to the processor **109.** The memory **111** stores instructions may be executable by the processor **109.** The processor **109** may comprise at least one data processor for executing program components for executing user or system-generated requests. The memory **111** may be communicatively coupled to the processor **109.** The memory **111** stores instructions, executable by the processor **109,** which, on execution, may cause the processor **109** to provide recommendations for incongruous consumption of electrical energy by an electrical asset **103.**

The computing system **107** further comprises data **201** and units **203** for performing various operations in accordance with the embodiments of the present disclosure. The data **201** may be stored within the memory **111** and may include, but not limited to, parameter data **205,** explanation data **207,** recommendation data **209** and other data **211.** Further, the data **201** may be stored within the memory **111** in the form of various data structures. Additionally, the data **201** may be organized using data models, such as relational or hierarchical data models. The other data **211** may store temporary data and temporary files, generated by the units **203** while performing various functions of the computing system **107.** In some embodiments, the parameter data **205** may be related to at least one of current, voltage, electric charge, resistance, capacitance, inductance, power factor, reactive power, and frequency.

The memory **111** may include one or more units **203.** The one or more units **203** may be configured to perform the steps of the present disclosure using the parameter data **205,** to provide recommendations for incongruous consumption of electrical energy by an electrical asset **103.** Each of the one or more units **205** may be a hardware unit which may be outside the memory **111** and coupled with the computing system **107.** As used herein, the term one or more units **205** refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more units **205** when configured with the described functionality defined in the present disclosure will result in a novel hardware. Further, the I/O interface **201** may be coupled with the processor **109** through which an input signal or/and an output signal is communicated. For example, the computing system **107** may communicate with the one or more sensors **105** via the I/O interface **201.**

In one implementation, the one or more units **205** may include, for example, a predicting unit **213,** an explanation generation unit **215,** a recommendation unit **217** and other units **219.** It will be appreciated that such aforementioned units **205** may be represented as a single unit or a combination of different units.

Referring back to **Figure 1****,** as there will be lot of parameters contributing to the consumption of the electrical energy, it becomes important to monitor them. To start with, the processor **109** or the predicting unit **213** first identifies the group of parameters responsible for the consumption of the electrical energy. According to an embodiment, the processor **109** or the predicting unit **213** may be associated with one or more sensors **105** such as current sensor, a voltage sensor for receiving data pertaining to the parameters sensed by the sensors. The parameters may include, for example, current, voltage, electric charge, resistance, capacitance, inductance, power factor, reactive power, and frequency, but not limited thereto. The processor **109** or the predicting unit **213** computes the coefficient values for each identified parameter of the group of parameters. For example, current, voltage, electric charge, resistance, capacitance, inductance, power factor, reactive power, and frequency are the group of parameters that are monitored continuously. When coefficient value may be computed of current, power factor and capacitance is greater than the threshold, then the plurality of parameters are selected among the group of parameters based on the coefficient values of the group of parameters. The coefficient values indicate contribution of corresponding parameter in the consumption of the electrical energy. This way, all those parameters which are contributing to the electrical energy consumption are identified for further processing.

Upon selecting the plurality of parameters, the processor **109** or the predicting unit **213** predicts total electrical energy consumption of the electrical asset **103** for a predefined time period by using a non-linear relation depicting the consumption of electrical energy. The non-linear relation is determined by performing regression analysis on the plurality of parameters being identified and monitored in the real-time. The regression analysis on the plurality of parameters to determine the non-linear relation is performed using a trained model such as Machine Learning (ML) model. For example, consider the non-liner dynamics is an equation X = ΘT (X). The term ΘT is a library of the candidate dynamics which enhances the performance of a sparse identification of nonlinear dynamics (SINDY) technique. In the electrical distribution system **101,** the library of candidate dynamics is chosen which comprises a mixture of nonlinear trigonometric functions such as sin (δ - θ) or cos (δ - θ). In an embodiment, the plurality of parameters of the electrical asset **103** is used in the non-linear dynamic equation to retrieve plurality of parameters among the group of parameters to further predict the electrical energy demand of the electrical asset. The values of the plurality of parameters are used in the non-linear dynamics equation as mentioned above. The equation between the consumption of the electrical energy by the electrical asset **103** and the plurality of parameters may be determined using the regression analysis. In an alternative embodiment, the equation representing non-linearity of the electrical asset 103 may be based on one or more parameters such as current, voltage, resistance, power, and the like. For example, the electrical distribution system 101 may be represented as a dynamical system of the form x'(t)=f(x(t)). Further, the values of the plurality of parameters are continuously monitored. When the values of the plurality of parameters are updated, the updated values (i.e., utilization of electrical energy by the electrical asset) is used in the non-linear dynamic equation, using which the total electrical energy consumption of the electrical asset **103** may be predicted in real time.

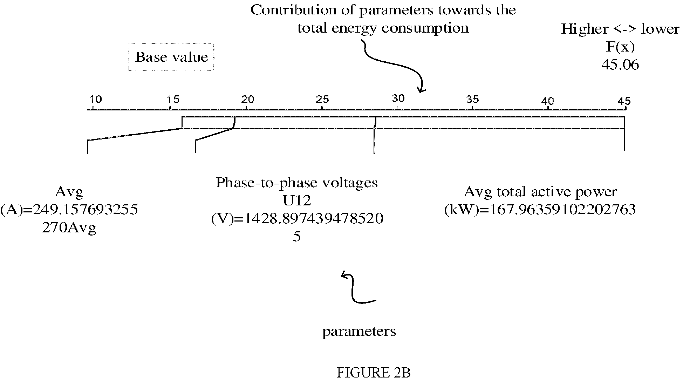

Further, the processor **109** determines whether the predicted total electrical energy consumption falls outside of electrical energy consumption range having a lower electrical energy threshold and an upper electrical energy threshold. For instance, consider the usage of voltage by electrical asset **103** is below the lower value [say for instance when the maximum utilization of power by the electrical asset **103** is 75KW and minimum possible consumption is 20 KW]. If the electrical asset 103 is utilizing 10KW, then it may be possible that there is a malfunctioning of a component of the electrical asset **103.** In an alternate embodiment, when the electrical asset **103** utilizes 95KW which falls outside of electrical energy consumption range, then it is a criteria where there may be an effected component due to which the parameter values are changed in an electrical asset **103.** A person skilled in the art will appreciate that the above mentioned lower and upper electrical energy threshold value is merely an example, and the embodiment of the present disclosure is not limited by the aforementioned values. When the predicted total electrical energy consumption falls outside the electrical energy consumption range, the processor **109** or the explanation generation unit **215** may generate an explanation of the predicted total electrical energy consumption by calculating contribution values for each of the plurality of parameters. The contribution values indicate relative contribution of each of the plurality of parameters to the predicted total energy consumption. The contribution values are nothing but the Shapley values that apply primarily in situations when the contributions of the plurality of parameters are unequal, but each parameter contribution in cooperation with each other are responsible for driving the predicted total electrical energy consumption outside the electrical energy consumption range. In an alternative embodiment, the Shapley value is computed by taking the average difference from all combinations. Essentially, the Shapley value is the average marginal contribution of a feature considering all possible combinations. Further, a person skilled in the art will appreciate that any known methods other than the above-mentioned method may be used to calculate the contribution values. The contribution values of each of the parameter may be as shown in FIG.2B. In the graph "Avg IL1 (A)" is contributed the most and "Avg Phase-to-Phase voltages U12(V)" may be the values that are pushing the prediction away from the desired value. For example, the machine learning model trained may predict the values responsible for driving the predicted total electrical energy consumption outside the electrical energy consumption range. The present disclosure identifies incongruous consumption of electrical energy by an electrical asset **103** and hence can be used to accurately predict system output for desired performance such as, for the asset and energy management of the electrical distribution system **101.**

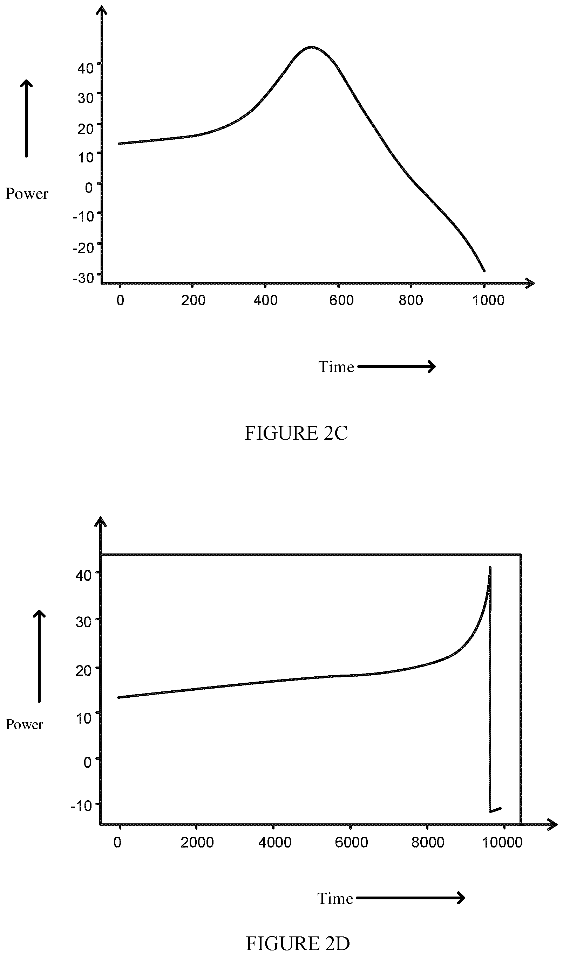

Thus, based on the contribution values, in next step, the processor **109** identifies those one or more parameters among the plurality of parameters which are responsible for driving the predicted total electrical energy consumption outside the electrical energy consumption range. The one or more parameters responsible for driving the predicted total electrical energy consumption are identified by comparing the contribution value of each of the plurality of parameters with a global threshold value. For instance, when electrical appliances use high electrical energy than the desired value for example say 40 KW, then the total electrical energy consumption of the electrical appliances may be as shown in **FIG.2C****.** In another example, when the electrical appliance uses high electrical energy than the desired value for example say 40 KW, then the time period at which the electrical asset utilizing the electrical energy may be as shown in **FIG.2D****.**

When the one or more parameters identified to have the corresponding contribution values beyond the global threshold value, then it may be identified as the parameters responsible for driving the predicted total electrical energy consumption. In an embodiment the processor **109** or the recommendation unit **217** may provide recommendations when the predicted total electrical energy consumption is below the lower electrical energy threshold. In an alternative embodiment, the processor **109** or the recommendation unit **217** may provide recommendations when the predicted total electrical energy consumption is high with respect to the upper electrical energy threshold.

In some embodiments, the recommendation may be stored in the form of recommendation data **209,** which may include at least one of software-related recommendations and hardware-related recommendations. For instance, if there is any malfunctioning in a component associated with electrical asset **103** due to which there is more energy consumption, then the recommendation like replacement the component to achieve better results may be provided in case of hardware recommendation. In an alternative embodiment, the software recommendation may be to change the condition of threshold values or settings/values of the component.

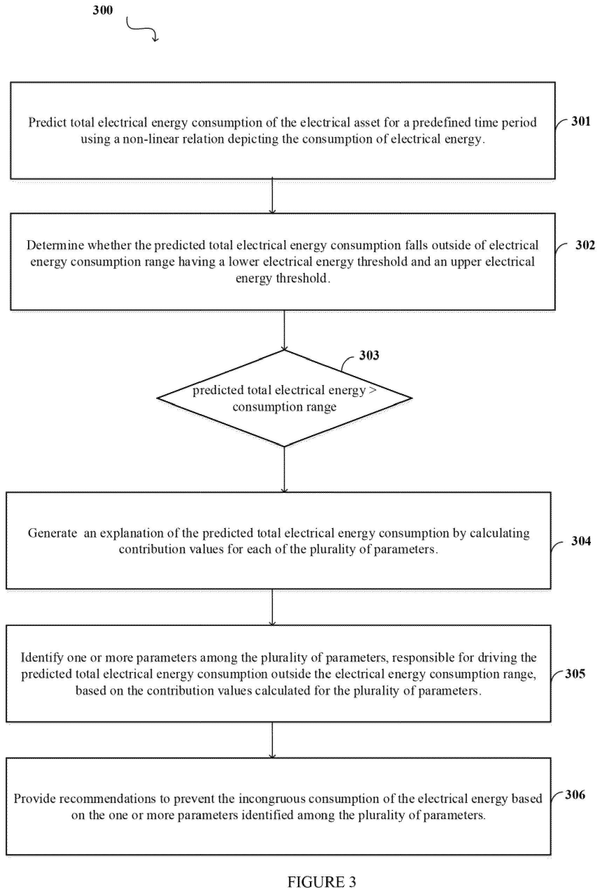

**Figure 3** shows an exemplary flow chart illustrating method steps for providing recommendations for incongruous consumption of electrical energy by an electrical asset 103, in accordance with some embodiments of the present disclosure. As illustrated in Figure 3, the method 300 may comprise one or more steps. The method **300** may be described in the general context of computer executable instructions. Generally, computer executable instructions can include routines, programs, objects, components, data structures, procedures, units, and functions, which perform particular functions or implement particular abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step **301,** the computing system **107** may predict in real-time, total electrical energy consumption of the electrical asset **103** for a predefined time period using a non-linear relation depicting the consumption of electrical energy. The non-linear relation is determined by performing regression analysis on a plurality of parameters monitored in real-time.

At step **302,** the computing system **107** may determine whether the predicted total electrical energy consumption falls outside of electrical energy consumption range having a lower electrical energy threshold and an upper electrical energy threshold. The electrical energy consumption range indicates a desired electrical energy consumption of the electrical asset **103.**

At step **303,** the computing system **107** may determine whether the predicted total electrical energy consumption falls outside the electrical energy consumption range. If the predicted total electrical energy consumption falls outside the electrical energy consumption range then the step 304 may be processed.

At step **304,** when the predicted total electrical energy consumption falls outside the electrical energy consumption range, the computing system **107** may generate an explanation of the predicted total electrical energy consumption by calculating contribution values for each of the plurality of parameters. The contribution values indicate relative contribution of each of the plurality of parameters to the predicted total energy consumption.

At step **305,** the computing system **107** may identify one or more parameters among the plurality of parameters, responsible for driving the predicted total electrical energy consumption outside the electrical energy consumption range, based on the contribution values calculated for the plurality of parameters.

At step **306,** the computing system **107** may provide recommendations to prevent the incongruous consumption of electrical energy based on the one or more parameters identified among the plurality of parameters.

### COMPUTER SYSTEM

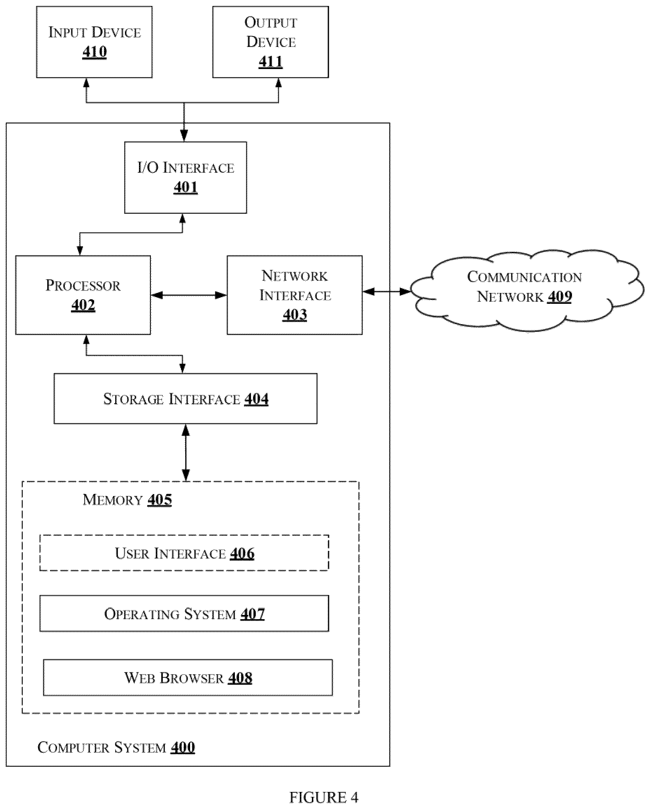

**Figure 4** illustrates a block diagram of an exemplary computer system **400** for implementing embodiments consistent with the present disclosure. In an embodiment, the computer system **400** may be used to implement the computing system **107.** Thus, the computer system **400** may be used for providing recommendations for incongruous consumption of electrical energy by an electrical asset **103.** In an embodiment, the computer system **400** may receive the measurement data of the plurality of input variables from the one or more sensors **105** over the communication network **409,** when the computer system **400** is implemented in the edge computing platform or the cloud computing platform or both. In another embodiment, the computer system **400** may be implemented in the electrical distribution system **101.** The computer system **400** may comprise a Central Processing Unit 402 (also referred as "CPU" or "processor"). The processor **402** may comprise at least one data processor. The processor **402** may include specialized processing units such as integrated system (bus) controllers, memory management control units, floating point units, graphics processing units, digital signal processing units, etc.

The processor **402** may be disposed in communication with one or more input/output (I/O) devices (not shown) via I/O interface **401.** The I/O interface **401** may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), highspeed packet access (HSPA+), global system for mobile communications (GSM), long-term evolution (LTE), WiMax, or the like), etc.

Using the I/O interface **401,** the computer system **400** may communicate with one or more I/O devices. For example, the input device **410** may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, sensors, etc. The output device **411** may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor **402** may be disposed in communication with the communication network **409** via a network interface **403.** The network interface **403** may communicate with the communication network **409.** The network interface **403** may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network **409** may include, without limitation, a direct interconnection, local area network (LAN), wide area network (WAN), wireless network (e.g., using Wireless Application Protocol), the Internet, etc. The network interface **403** may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, Bluetooth mesh, Zigbee, etc.

The communication network **409** includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor **402** may be disposed in communication with a memory **405** (e.g., RAM, ROM, etc. not shown in Figure 4) via a storage interface 404. The storage interface 404 may connect to memory **405** including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user interface **406,** an operating system **407,** web browser **408** etc. In some embodiments, computer system **400** may store user/application data, such as, the data, variables, records, etc., as described in this disclosure. Such databases may be implemented as fault-tolerant, relational, scalable, secure databases such as Oracle ^{®} or Sybase^{®}.

The operating system **407** may facilitate resource management and operation of the computer system **400.** Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROIDTM, BLACKBERRY^{R} OS, or the like.

In some embodiments, the computer system **400** may implement the web browser **408** stored program component. The web browser **408** may be a hypertext viewing application, for example MICROSOFT^{R} INTERNET EXPLORER^{™}, GOOGLE^{R} CHROME^{™0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers **408** may utilize facilities such as AJAX^{™}, DHTML^{™}, ADOBE^{R} FLASH^{™}, JAVASCRIPT^{™}, JAVA^{™}, Application Programming Interfaces (APIs), etc. In some embodiments, the computer system **400** may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R}, NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 400 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

Embodiments of the present disclosure provides method and system for providing recommendations for incongruous consumption of electrical energy by an electrical asset 103. The present disclosure performs complex system analysis using non-linear dynamics on measurement data of the electrical distribution system **101.** The present disclosure provides high accuracy in predicting demand of the electrical asset **103.** The present disclosure considers the complex non-linear correlation between the variables through sparse regression. The present disclosure identifies one or more parameters responsible for driving the predicted total electrical energy consumption outside the electrical energy consumption range and also explanation of the predicted total electrical energy consumption. Thus, explanation helps in quick and easy understanding of what drove the system to such a demand state.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 3 shows certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

An aspect of the invention relates to a computing system for providing recommendations for incongruous consumption of electrical energy by an electrical asset, the computing system comprising: a processor; and a memory coupled to the processor, the processor configured to: predict, in real-time, total electrical energy consumption of the electrical asset for a predefined time period using a non-linear relation depicting the consumption of electrical energy, wherein the non-linear relation is determined by performing regression analysis on a plurality of parameters monitored in the real-time; determine whether the predicted total electrical energy consumption falls outside of electrical energy consumption range having a lower electrical energy threshold and an upper electrical energy threshold, wherein the electrical energy consumption range indicates a desired electrical energy consumption of the electrical asset; and when the predicted total electrical energy consumption falls outside the electrical energy consumption range, the processor configured to: generate an explanation of the predicted total electrical energy consumption by calculating contribution values for each of the plurality of parameters, wherein the contribution values indicate relative contribution of each of the plurality of parameters to the predicted total energy consumption; identify one or more parameters among the plurality of parameters, responsible for driving the predicted total electrical energy consumption outside the electrical energy consumption range, based on the contribution values calculated for the plurality of parameters; and provide recommendations to prevent the incongruous consumption of the electrical energy based on the one or more parameters identified among the plurality of parameters.

A further aspect is the computing system as described above, wherein the electrical asset comprises at least one of an active component of an electric grid, a passive component of the electric grid, an electrical distribution component in industrial, and an electrical appliance. A further aspect is the computing system as described above, wherein the plurality of parameters comprises at least one of current, voltage, electric charge, resistance, capacitance, inductance, power factor, reactive power, and frequency. A further aspect is the computing system as described above, wherein the plurality of parameters are monitored using corresponding plurality of sensors associated with the electrical asset. A further aspect is the computing system as described above, wherein the plurality of parameters are selected among a group of parameters, and wherein to select the plurality of parameters among the group of parameters, the processor is configured to: identify the group of parameters responsible for the consumption of the electrical energy; compute coefficient values for each of the group of parameters, wherein each of the coefficient values indicate contribution of corresponding parameter in the consumption of the electrical energy; and select the plurality of parameters among the group of parameters based on the coefficient values of the group of parameters, wherein each of the selected plurality of parameters have a coefficient value greater than a threshold value.

A further aspect is the computing system as described above, wherein the regression analysis on the plurality of parameters to determine the non-linear relation is performed using a trained model. A further aspect is the computing system as as described above, wherein to determine the non-linear relation by performing the regression analysis on the plurality of parameters, using the trained model, the processor is configured to: determine the non-linear relation between the consumption of the electrical energy by the electrical asset vis-à-vis the plurality of parameters using the regression analysis; update the non-linear relation based on the plurality of parameters monitored in the real-time; and predict the total electrical energy consumption of the electrical asset in the real-time based on the updated non-linear relation.

A further aspect is the computing system as described above, wherein to identify the one or more parameters among the plurality of parameters, responsible for driving the predicted total electrical energy consumption outside the electrical energy consumption range, based on the contribution values calculated for the plurality of parameters, the processor is configured to: compare the contribution value of each of the plurality of parameters with a global threshold value; and identify the one or more parameters, among the plurality of parameters, such that the one or more parameters identified have the corresponding contribution values going beyond the global threshold value.

A further aspect is the computing system as described above, wherein the processor is further configured to provide recommendations based on whether the predicted total electrical energy consumption is below the lower electrical energy threshold or above the upper electrical energy threshold. A further aspect is the computing system as described above, wherein the recommendations comprise at least one of software-related recommendations and hardware-related recommendations.

### Referral Numerals:

| **Referral number** | **Description** |
|---|---|
| 100 | Exemplary environment |
| 101 | Electrical distribution system |
| 103 | Electrical asset |
| 105 | One or more sensors |
| 107 | Computing system |
| 109 | Processor |
| 111 | Memory |
| 113 | I/O interface |
| 201 | data |
| 203 | Units |
| 205 | Parameter data |
| 207 | Explanation data |
| 209 | Recommendation data |
| 211 | Other data |
| 213 | Predicting Unit |
| 215 | Explanation generation unit |
| 217 | Recommendation Unit |
| 219 | Other units |
| 400 | Computer system |
| 401 | I/O interface |
| 402 | Processor |
| 403 | Network interface |
| 404 | Storage interface |
| 405 | Memory |
| 406 | User interface |
| 407 | Operating system |
| 408 | Web browser |
| 409 | Communication network |
| 410 | Input device |
| 411 | Output device |

## Claims

1. A method of providing recommendations for incongruous consumption of electrical energy by an electrical asset (103), the method comprising:
predicting, in real-time, total electrical energy consumption of the electrical asset (103) for a predefined time period using a non-linear relation depicting the consumption of electrical energy, wherein the non-linear relation is determined by performing regression analysis on a plurality of parameters monitored in the real-time;
determining whether the predicted total electrical energy consumption falls outside of electrical energy consumption range having a lower electrical energy threshold and an upper electrical energy threshold, wherein the electrical energy consumption range indicates a desired electrical energy consumption of the electrical asset (103); and
when the predicted total electrical energy consumption falls outside the electrical energy consumption range, performing:
generating an explanation of the predicted total electrical energy consumption by calculating contribution values for each of the plurality of parameters, wherein the contribution values indicate relative contribution of each of the plurality of parameters to the predicted total energy consumption;
identifying one or more parameters among the plurality of parameters, responsible for driving the predicted total electrical energy consumption outside the electrical energy consumption range, based on the contribution values calculated for the plurality of parameters; and
providing recommendations to prevent the incongruous consumption of the electrical energy based on the one or more parameters identified among the plurality of parameters.

2. The method as claimed in claim 1, wherein the electrical asset (103) comprises at least one of an active component of an electric grid, a passive component of the electric grid, an electrical distribution component in industrial, and an electrical appliance.

3. The method as claimed in any one of the preceding claims, wherein the plurality of parameters comprises at least one of current, voltage, electric charge, resistance, capacitance, inductance, power factor, reactive power, and frequency.

4. The method as claimed in claim 1, further comprising: monitoring the plurality of parameters using corresponding plurality of sensors (105) associated with the electrical asset (103).

5. The method as claimed in any one of the preceding claims, wherein the plurality of parameters are selected among a group of parameters by:
identifying the group of parameters responsible for the consumption of the electrical energy;
computing coefficient values for each of the group of parameters, wherein each of the coefficient values indicate contribution of corresponding parameter in the consumption of the electrical energy; and
selecting the plurality of parameters among the group of parameters based on the coefficient values of the group of parameters, wherein each of the selected plurality of parameters have a coefficient value greater than a threshold value.

6. The method as claimed in any one of the preceding claims, wherein the regression analysis on the plurality of parameters to determine the non-linear relation is performed using a trained model.

7. The method as claimed in claim 6, wherein to determine the non-linear relation by performing the regression analysis on the plurality of parameters using the trained model, the method comprises:
determining the non-linear relation between the consumption of the electrical energy by the electrical asset vis-à-vis the plurality of parameters using the regression analysis;
updating the non-linear relation based on the plurality of parameters monitored in the real-time; and
predicting the total electrical energy consumption of the electrical asset in the real-time based on the updated non-linear relation.

8. The method as claimed in any one of the preceding claims, wherein identifying the one or more parameters among the plurality of parameters, responsible for driving the predicted total electrical energy consumption outside the electrical energy consumption range, based on the contribution values calculated for the plurality of parameters comprises:
comparing the contribution value of each of the plurality of parameters with a global threshold value; and
identifying the one or more parameters, among the plurality of parameters, such that the one or more parameters identified have the corresponding contribution values going beyond the global threshold value.

9. The method as claimed in any one of the preceding claims, wherein providing the recommendations is further based on whether the predicted total electrical energy consumption is below the lower electrical energy threshold or above the upper electrical energy threshold.

10. The method as claimed in any one of the preceding claims, wherein the recommendations comprise at least one of software-related recommendations and hardware-related recommendations.

11. A computing system (107) for providing recommendations for incongruous consumption of electrical energy by an electrical asset (103), the computing system (107) comprising:
a processor (109); and
a memory (111) coupled to the processor, the processor (109) configured to carry out a method according to claim 1 or any one of the claims 3-10.

12. The computing system (107) as claimed in claim 11, wherein the electrical asset (103) comprises at least one of an active component of an electric grid, a passive component of the electric grid, an electrical distribution component in industrial, and an electrical appliance.
